# EUROPEAN PATENT SPECIFICATION

(11) **EP 3 427 619 B1**
(45) Date of publication and mention of the grant of the patent: **25.02.2026**
(21) Application number: 17180552.6
(22) Date of filing: 10.07.2017
(51) Int. Cl.: A47J 43/044, A47J 43/07, A47J 43/06

(54) **TOOL DETACHING MEANS FOR KITCHEN APPLIANCES**
WERKZEUGABLÖSEMITTEL FÜR KÜCHENGERÄTE
MOYEN DE DÉTACHEMENT D'OUTIL POUR DES APPAREILS DE CUISINE

(43) Date of publication of application: 16.01.2019
(73) Proprietor: BSH Hausgeräte GmbH, 81739 München (DE)
(72) Inventor: Brecko, Ales, 3000 Celje (SI); Decman, Igor, 3232 Ponikva (SI); Robida, Tomaz, 3341 Smartno ob Dreti (SI); Strojansek, Aleksander, 3331 Nazarje (SI)

(56) References cited:
- EP-A1- 2 671 485
- FR-A1- 2 854 561
- GB-A- 880 339
- US-A- 5 567 047
- US-A1- 2003 156 899
- US-A1- 2011 232 505

## Description

### Background of the Invention

The present invention relates to tools for kitchen appliances used in the preparation of food and beverage, more particularly to tool detaching means for such kitchen appliances.

### State of the Art

The size and power of kitchen appliances is ever increasing. Therefore, the forces involved in the food preparation processes are also getting larger. Consequently, the tools used in those processes have to be attached to the kitchen appliances more firmly and the elements retaining the tools in place have to be stronger. It became quite difficult to detach a tool from a kitchen appliance, especially a bigger one, e.g. a stand mixer. The user has to exert a considerable force to pull the tool out of the drive assembly. Thus, the need arose to make it easier for the user to remove the tool from the appliance.

There are several tool detaching means for kitchen appliances known in the prior art.

EP 2878246 A1 discloses a tool for a kitchen device with a shaft, which is removably connected to the driving means of the kitchen device. The tool comprises a disconnecting means adapted to disconnect the tool from the drive unit of the kitchen device that is firmly fixed onto the tool. The disconnecting means is actuatable by a user.

There are quite a few drawbacks linked to this solution. First, the disconnecting means can be actuated in manner that a force is transferred only on one side. Thus, the force needed for a removal of the tool is not sufficient for bigger kitchen appliances having tools that are attached more firmly to the driving means thereof.

Second, when the appliance is switched off, the driving means can stop in a position that is inconvenient for removal of the tool. This is the case, when the disc-shaped disconnecting means is located such that it is accessible from behind the tool.

US 2098098 A describes a food mixer with means for ejecting the beaters which are small and very simple in construction. In order to operate efficiently, the ejecting means have to be positioned adjacent the lower part of the housing. As such, they are not designed to offer sufficient force and torque to eject a tool of a modern kitchen appliance, more so with these tools being more robust and bigger and attached more firmly to the kitchen appliance. Documents EP 2 671 485 A1, US 5 567 047 A, US 2011/232505 A1, US 2003/156899 A1, FR 2 854 561 and GB 880 339 A also disclose tools for a kitchen device.

### Problem to be solved

It is an object of the present invention to provide an improved tool of the kitchen appliance such that it is more convenient to manipulate with, especially regarding removal of the tool from the kitchen appliance, cheaper and easier to manufacture.

### Solution according to the invention

The object is achieved by a tool according to the features of claim 1. Advantageous embodiments that can be implemented by themselves or in combination are described in dependent claims.

A tool for a kitchen appliance comprising a shaft configured to be removably attachable to a driving means of the kitchen appliance and a detaching means for ejecting the tool from the driving means of the kitchen appliance, wherein the tool comprises an anchoring element for cooperating with the detaching means, the detaching means including at least one releasing element being movable relative thereto by a user intervention such that a sliding face of the releasing element slides against a projection of the driving means and urges the detaching means in a direction away from the driving means, wherein the detaching means is releasably attached to the tool.

The detaching means is an integral part of the tool. Preferably, the anchoring element has a sphere-like shape to ensure rotationally symmetrical sliding of the tool in relation to the detaching means. Accordingly, a central portion of the detaching means comprises a substantially spherical hole for cooperation with the anchoring element. When the releasing element is activated, it slides against a projection of the driving means. The hole of the detaching means cooperates with the anchoring element of the tool in a way that the detaching means and consequently the tool can be moved in a direction away from the driving means. Thus, the tool can be released from the kitchen appliance.

The driving means comprises a sleeve in which the tool shaft is removably insertable. The tool is lockable in place by retaining elements. In order to remove the tool from the driving means first the locking force of the retaining elements has to be overcome. This is done by actuating the at least one releasing element whereby the tool is ejected from the driving means. The user can easily remove the tool from the kitchen appliance.

By means of a tool according to the present invention it is possible to detach the tool from a kitchen appliance very conveniently, i.e. easily, fast and without a use of any kind of implements. The operation requires a simple user intervention and it prevents the situation when he could hurt himself by pulling the tool out of the driving means heavily and eventually hitting the rim of the bowl with his hand or simply dip his hand in the bowl possibly full of ingredients which is not very sanitary. Furthermore, the tool cannot just fall into the bowl as is the case with some of the detaching means available on the market. Moreover, if the bowl contains food, this normally results in splashing and soiling the vicinity of the kitchen appliance.

The tool to be used with the kitchen appliance can be a stirring or beating whisk, a beater, a kneading hook, etc. The processing actions or processes herein refer to all aspects of food preparation including, but not limited to, mixing, grinding, blending, cutting, chopping, kneading, milling and beating.

The kitchen appliance with which the tool according to the invention is preferably used is a stand mixer, for instance a planetary mixer. i.e. the one that imparts a planetary processing action to the tool which is quite complex. In alternative embodiments, the stand mixer can be a non-planetary mixer and impart a different (non-planetary) type of processing action to the tool, for example a spiral processing action or the like. The solution according to the invention can well be used with other kitchen appliances as well.

### Embodiments of the invention

In a preferred embodiment, the detaching means comprises at least one flexible element for returning the releasing element to the starting position. In this way the user is spared from having to deal with the releasing elements as they are deactivated completely automatically. Specifically, the flexible element is a compression spring.

According to one embodiment the detaching means includes a pair of releasing elements. This provides the effect that the detaching is more effective and convenient as the detaching means acts on the driving means on two sides by means of two releasing elements. The detaching of the tool is effected more smoothly. The tool is ejected from the driving means to such extent that the user only has to easily pull it out of the driving means.

According to the present invention, the detaching means is releasably attachable to the tool. This means that the same detaching means is used with all the tools of the kitchen appliance, i.e. is transferable among them. Consequently, the total cost of the appliance with many tools is reduced.

Specifically, the detaching means is made of a plastic material and as such easy to manufacture and assemble and therefore inexpensive in cost.

Preferably, the releasing element comprises means for indicating the position thereof. This means can be of contrastingly different colour from that of the body of the detaching means, for example it being white and the body black in colour. This has the advantage that the user can easily locate the position of the releasing elements and actuate them.

Further, it is conceivable that the detaching means has a bottom for the protection of the driving means. In this respect, the detaching means serves as a protective cap and the bottom part of the driving means is protected from the ingress of the food processed in the bowl.

Preferably, when the appliance is activated, i.e. when the tool rotates, the detaching means stays in a fixed position relative to the driving means and the appliance. This is very convenient as the user can release the tool from the appliance in the same position as when it was attached to it and this position is independent of the position in which the appliance stops.

A second aspect of the invention is a kitchen appliance comprising a tool as described in claim 1 and the dependent claims.

### Brief description of the figures

Fig. 1 shows the tool with the detaching means attached to the driving means
Fig. 2 shows the operating principle of the detaching means
Fig. 3 depicts the detaching means
Fig. 4 shows a tool with the detaching means attached to the kitchen appliance

### Detailed description

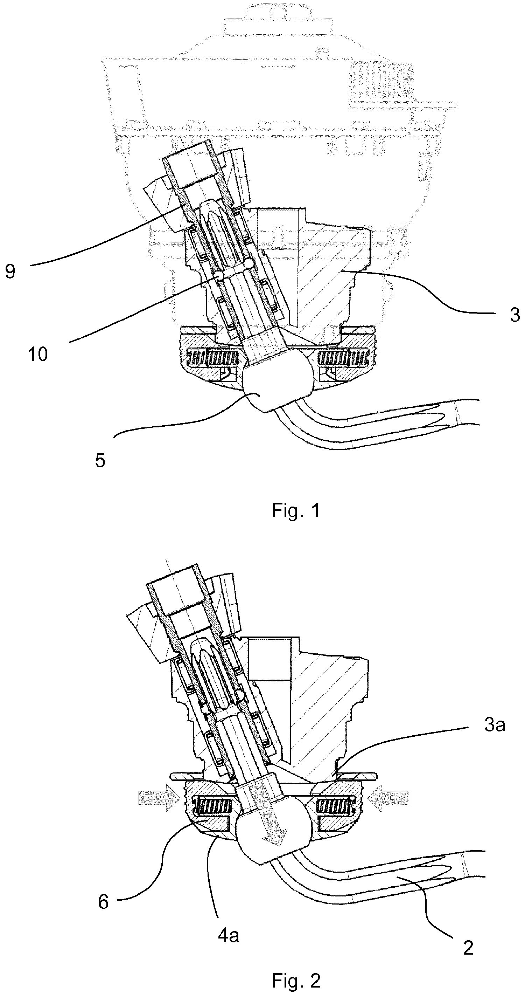

Fig. 1 depicts a tool 1 attached to the kitchen appliance 1a. One end of the tool shaft 2 is removably inserted into the sleeve 9 of the driving means 3 where it is held in place through a snap-on mechanism which comprises retaining elements 10 in a form of prestressed balls and a groove on the tool 1. The tool 1 with an anchoring element 5 has a detaching means 4 attached to it. The detaching means 4 is in an unactivated position. The releasing elements 6, more specifically the sliding faces 6a thereof, are in contact with projections 3a of the driving means 3. A face of the detaching means 4 which faces the driving means 3 abuts the lower part thereof. By activating the releasing elements 6 the inclined sliding faces 6a slide on the projections 3a. Consequently, the detaching means 4 which cooperates with the anchoring element 5 of the tool 1 moves away from the driving means 3, wherein the locking force of the retaining elements 10 has to be overcome. Finally, the tool 1 is released from the sleeve 9 (see Fig. 2). Therefore, the user can easily remove the tool 1 from the driving means 3.

Fig. 2 shows the activation of the releasing elements 6 of the detaching means 4. Fig. 1 and Fig. 2 are practically the same. The main difference is the position of the releasing elements 6. In Fig. 2 the releasing elements 6 are in an activated position, precisely in the end position, just before the force of the flexible elements 7 in the form of compression springs begins to act upon them and move them to the starting position. The tool 1 is ejected from the driving means 3 and ready to be removed by a user from the kitchen appliance 1a.

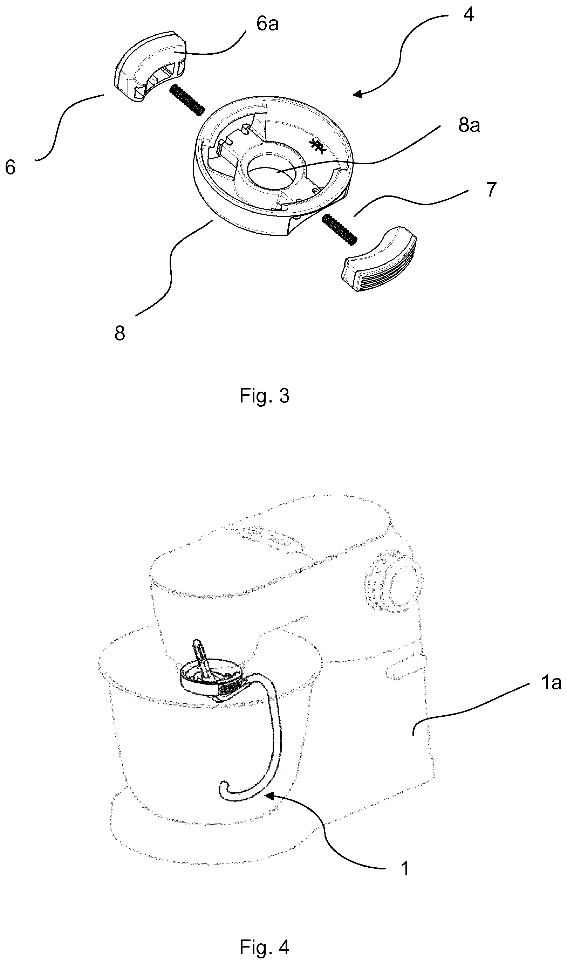

In Fig. 3, the detaching means 4 is shown in more detail. A central portion of the body 8 of the detaching means 4 comprises a substantially spherical through hole 8a for cooperating with the anchoring element 5. On the upper inner side which faces the central portion, the releasing element 6 is formed as a substantially non-planar sliding face 6a. When the releasing elements 6 are activated, they slide with the said sliding faces 6a against the projection 3a of the driving means 3. As the sliding face 6a is inclined in relation to the horizontal, the relative movement of the releasing elements 6 produces a downward movement of the detaching means 4 and consequently a movement of the tool 1 in the direction parallel to the axis thereof. The spherical hole 8a of the detaching means 4 cooperates with the anchoring element 5 of the tool 1 in a way that the detaching means 4 and consequently the tool 1 is moved in a direction away from the driving means 3. Thereby, the tool 1 of the kitchen appliance 1a is ejected longitudinally in the direction parallel to its shaft 2 inserted in the driving means 3. Then, the user can easily remove the tool 1 out of the sleeve 9 and in turn from the driving means 3.

The body 8 of the detaching means 4 has a substantially circular form, i.e. a disc. A pair of releasing elements 6 is arranged on the periphery of the body 8, more specifically on diametrically opposed sides thereof. When the kitchen appliance 1a exerts the processing action, the spherical anchoring element 5 of the tool 1 applies a multi-axial circular motion (planetary motion) in relation to the hole 8a of the body 8.

The releasing elements 6 can therefore assume two positions. When the tool 1 is inserted into the kitchen appliance 1a and attached to the driving means 3, the releasing elements 6 are in a starting position. When a user wants to detach the tool 1 from the kitchen appliance 1a, he has to activate the releasing elements 6 which are hence in the activated position. By activating the releasing elements 6 the tool 1 is progressively ejected from the kitchen appliance 1a. When the tool 1 is released from the driving means 3, the user deactivates the releasing elements 6 which then return to the starting position by means of the flexible elements 7.

Fig. 4 shows a kitchen appliance 1a according to a second aspect. The tool 1, in this case a kneading tool, with the detaching means 4 is disposed above a container of the kitchen appliance 1a. A pivoting arm is attached to pedestal extending upwardly from a base. A head of the pivoting arm comprises the driving means 3 for driving the tool 1. The container is arranged on the base of the appliance 1a. The tool 1 of the kitchen appliance 1a exerts a planetary motion. Shown is one of the most convenient positions of the detaching means 4 and its releasing elements 6 in relation to the kitchen appliance 1a for releasing the tool 1 therefrom.

### Reference signs list

- 1: Tool
- 1a: Kitchen appliance
- 2: Shaft
- 3: Driving means
- 3a: Projection
- 4: Detaching means
- 4a: Bottom of the detaching means
- 5: Anchoring element
- 6: Releasing element
- 6a: Sliding face
- 7: Flexible element
- 8: Body of the detaching means
- 8a: Hole
- 9: Sleeve
- 10: Retaining element

## Claims

1. A tool (1) for a kitchen appliance (1a) comprising a shaft (2) configured to be removably attachable to a driving means (3) of the kitchen appliance (1a) and a detaching means (4) for ejecting the tool (1) from the driving means (3) of the kitchen appliance (1 a), wherein the tool (1) comprises an anchoring element (5) for cooperating with the detaching means (4), the detaching means (4) is releasably attachable to the tool (1), said tool (1) being **characterized in that** the detaching means (4) includes at least one releasing element (6) being movable relative thereto by a user intervention such that a sliding face (6a) of the releasing element (6) slides against a projection (3a) of the driving means (3) and urges the detaching means (4) in a direction away from the driving means (3).

2. Tool (1) according to claim 1, wherein the anchoring element (5) is sphere-like.

3. Tool (1) according to any of the preceding claims, wherein the detaching means (4) comprises at least one flexible element (7) for returning the releasing element (6) to the starting position.

4. Tool (1) according to any of the preceding claims, wherein the detaching means (4) includes a pair of releasing elements (6).

5. Tool (1) according to claims 3 or 4, wherein the flexible element (7) is a compression spring.

6. Tool (1) according to any of the preceding claims, wherein the detaching means (4) is made of a plastic material.

7. Tool (1) according to any of the preceding claims, wherein a means for indicating the position of the releasing element (6), positioned thereon, is of contrastingly different colour from that of the body of the detaching means (4).

8. Tool (1) according to any of the preceding claims, wherein the detaching means (4) has a bottom (4a) for the protection of the driving means (3) from the ingress of the food.

9. A kitchen appliance (1a) comprising a tool (1) according to any of the preceding claims.

## Patentansprüche

1. Werkzeug (1) für ein Küchengerät (1a) mit einer Welle (2), die so ausgelegt ist, dass sie sich abnehmbar an einem Antriebsmittel (3) des Küchengeräts (1a) anbringen lässt, und einem Abmontiermittel (4) zum Auswerfen des Werkzeugs (1) aus dem Antriebsmittel (3) des Küchengeräts (1a), wobei das Werkzeug (1) ein Verankerungselement (5) umfasst, das mit dem Abmontiermittel (4) zusammenwirkt, wobei sich das Abmontiermittel (4) lösbar an dem Werkzeug (1) anbringen lässt, wobei das Werkzeug (1) **dadurch gekennzeichnet ist, dass** das Abmontiermittel (4) mindestens ein Freigabemittel (6) aufweist, das durch Benutzereinwirkung in Bezug dazu so beweglich ist, dass eine Gleitfläche (6a) des Freigabemittels (6) an einem Vorsprung (3a) des Antriebsmittels (3) entlanggleitet und das Abmontiermittel (4) in eine von dem Antriebsmittel (3) wegführende Richtung drückt.

2. Werkzeug (1) nach Anspruch 1, wobei das Verankerungselement (5) kugelartig ist.

3. Werkzeug (1) nach einem der vorhergehenden Ansprüche, wobei das Abmontiermittel (4) mindestens ein flexibles Element (7) umfasst, welches das Freigabeelement (6) in die Ausgangsposition zurückbringt.

4. Werkzeug (1) nach einem der vorhergehenden Ansprüche, wobei das Abmontiermittel (4) ein Paar Freigabeelemente (6) aufweist.

5. Werkzeug (1) nach Anspruch 3 oder 4, wobei es sich bei dem flexiblen Element (7) um eine Druckfeder handelt.

6. Werkzeug (1) nach einem der vorhergehenden Ansprüche, wobei das Abmontiermittel (4) aus einem Kunststoffmaterial hergestellt ist.

7. Werkzeug (1) nach einem der vorhergehenden Ansprüche, wobei ein Mittel zum Anzeigen der Position des Freigabeelements (6), das daran positioniert ist, eine sich stark von der Farbe des Hauptteils des Abmontiermittels (4) unterscheidende Farbe hat.

8. Werkzeug (1) nach einem der vorhergehenden Ansprüche, wobei das Abmontiermittel (4) einen Boden (4a) aufweist, der das Antriebsmittel (3) davor schützt, dass die Lebensmittel hineingelangen.

9. Küchengerät (1a) mit einem Werkzeug (1) nach einem der vorhergehenden Ansprüche.

## Revendications

1. Outil (1) pour un appareil de cuisine (1a) comprenant un arbre (2) configuré pour pouvoir être attaché de manière amovible à un moyen d'entraînement (3) de l'appareil de cuisine (1a) et un moyen de détachement (4) pour éjecter l'outil (1) du moyen d'entraînement (3) de l'appareil de cuisine (1a), dans lequel l'outil (1) comprend un élément d'ancrage (5) pour coopérer avec le moyen de détachement (4), le moyen de détachement (4) peut être attaché de manière amovible à l'outil (1), ledit outil (1) étant **caractérisé en ce que** le moyen de détachement (4) comporte au moins un élément de libération (6) mobile par rapport à celui-ci par une intervention de l'utilisateur de telle sorte qu'une face coulissante (6a) de l'élément de libération (6) coulisse contre une saillie (3a) du moyen d'entraînement (3) et pousse le moyen de détachement (4) dans une direction s'éloignant du moyen d'entraînement (3).

2. Outil (1) selon la revendication 1, dans lequel l'élément d'ancrage (5) est de forme sphérique.

3. Outil (1) selon l'une des revendications précédentes, dans lequel le moyen de détachement (4) comprend au moins un élément flexible (7) pour rappeler l'élément de libération (6) vers la position de départ.

4. Outil (1) selon l'une des revendications précédentes, dans lequel le moyen de détachement (4) comporte une paire d'éléments de libération (6).

5. Outil (1) selon la revendication 3 ou 4, dans lequel l'élément flexible (7) est un ressort de compression.

6. Outil (1) selon l'une des revendications précédentes, dans lequel le moyen de détachement (4) est réalisé en matière plastique.

7. Outil (1) selon l'une des revendications précédentes, dans lequel un moyen d'indication de la position de l'élément de libération (6), positionné sur celui-ci, présente une couleur différente qui contraste de celle du corps du moyen de détachement (4).

8. Outil (1) selon l'une des revendications précédentes, dans lequel le moyen de détachement (4) présente un fond (4a) pour la protection du moyen d'entraînement (3) contre l'infiltration d'aliments.

9. Appareil de cuisine (1a) comprenant un outil (1) selon l'une des revendications précédentes.
